# EUROPÄISCHE PATENTANMELDUNG

(11) **EP 3 045 943 A1**
(43) Veröffentlichungstag der Anmeldung: **20.07.2016**
(21) Anmeldenummer: 16150375.0
(22) Anmeldetag: 07.01.2016
(51) Int. Cl.: G02B 5/30, G01J 4/00

(54) **POLARISATIONSFILTER MIT METALLISCHEN STEGEN**

(30) Priorität: 13.01.2015 DE 102015200324
(71) Anmelder: Fraunhofer-Gesellschaft zur Förderung der angewandten Forschung e.V., 80686 München (DE)
(72) Erfinder: Junger, Stephan, 91088 Bubenreuth (DE); Weber, Norbert, 91367 Weißenohe (DE); Neubauer, Harald, 91052 Erlangen (DE)
(74) Vertreter: Gagel, Roland

(57) **Zusammenfassung**

Die vorliegende Erfindung betrifft ein Polarisationsfilter, das durch wenigstens ein periodisches Liniengitter aus parallel verlaufenden metallischen Stegen auf einer dielektrischen Schicht gebildet ist. Die metallischen Stege sind in ihrer Längserstreckung durch Schlitze unterbrochen, die sich bis auf die dielektrische Schicht erstrecken. Die Mittenabstände der Schlitze sind in einer Richtung parallel zu den metallischen Stegen größer als die Periode des Liniengitters und variieren über das Polarisationsfilter. Das vorgeschlagene Polarisationsfilter lässt sich insbesondere für den sichtbaren Spektralbereich mit einem CMOS-Prozess mit hoher Zuverlässigkeit auch über eine größere Fläche herstellen.

## Beschreibung

### Technisches Anwendungsgebiet

Die vorliegende Erfindung betrifft ein Polarisationsfilter, insbesondere für den sichtbaren oder ultravioletten Spektralbereich, das durch wenigstens ein periodisches Liniengitter aus parallel verlaufenden metallischen Stegen auf einer dielektrischen Schicht gebildet ist. Die Erfindung betrifft auch einen Polarisationssensor, der mit einem derartigen Polarisationsfilter ausgestattet ist.

Polarisationsfilter mit periodischen Liniengittern aus parallel verlaufenden metallischen Stegen sind vor allem im infraroten und noch längerwelligen Spektralbereich bekannt. Die Periode des Liniengitters muss dabei kleiner sein als die Wellenlänge bzw. der Wellenlängenbereich, für den das Polarisationsfilter ausgebildet ist. Dies führt zu Problemen mit der Herstellbarkeit des Liniengitters, wenn das Polarisationsfilter für sichtbares Licht geeignet sein soll. Die Periode der Abfolge von metallischen Gitterstegen und dazwischen liegenden Freiräumen muss dann bei ≤ 300 nm liegen. Gleichzeitig müssen die metallischen Stege jedoch relativ hoch sein (z.B. ca. 400 nm), um ein hohes Kontrastverhältnis des Polarisationsfilters zu erreichen. Die Herstellung eines derartigen Filters über eine größere Fläche von z.B. mehr als 3 x 3 µm² in einem CMOS-Prozess führt bei derartigen Abmessungen jedoch zu einer geringen Ausbeute, da die langgestreckten Gitterstege beim Ätzen teilweise umfallen. Eine zuverlässige Prozessierbarkeit mit hoher Prozessausbeute lässt sich damit nicht erreichen.

Die US 7,186,968 B2 zeigt ein Beispiel für ein derartiges Polarisationsfilter, bei dem die Gitterperiode 320 nm beträgt. Die einzelnen Gitterstege weisen dabei eine Breite von 160 nm auf. Soll ein derartiges Polarisationsfilter mit einem hohen Kontrastverhältnis in einem CMOS-Prozess hergestellt werden, so ist nicht mit einer hohen Zuverlässigkeit der Prozessierung zu rechnen. Die Gitterstege werden zum Teil nicht stehen bleiben, sondern sich zur Seite neigen, und die beabsichtigte Funktion als Polarisationsfilter geht dadurch teilweise oder vollständig verloren. Die Druckschrift gibt keinerlei Hinweise darauf, wie dieser Problematik begegnet werden kann.

Aus der US 2014/0293195 A1 ist ein Polarisationsfilter mit einem periodischen Liniengitter bekannt, dessen metallische Stege in ihrer Längserstreckung durch Schlitze unterbrochen sind. Die Schlitze sind ebenfalls periodisch angeordnet und weisen Mittenabstände auf, die in Längserstreckung der metallischen Stege größer als die Periode des Liniengitters sind.

Die EP 1767965 A1 beschreibt ein Polarisationsfilter mit einem periodischen Liniengitter aus parallel verlaufenden metallischen Stegen auf einer dielektrischen Schicht, die durch metallische Querstege gekreuzt werden.

Die Aufgabe der vorliegenden Erfindung besteht darin, ein Polarisationsfilter mit einem Liniengitter aus parallel verlaufenden metallischen Gitterstegen anzugeben, das sich auch für den sichtbaren Spektralbereich mit hoher Zuverlässigkeit in einem CMOS-Prozess herstellen lässt.

### Darstellung der Erfindung

Die Aufgabe wird mit dem Polarisationsfilter gemäß Patentanspruch 1 gelöst. Vorteilhafte Ausgestaltungen des Polarisationsfilters sind Gegenstand der abhängigen Patentansprüche oder lassen sich der nachfolgenden Beschreibung sowie den Ausführungsbeispielen entnehmen. Patentanspruch 5 gibt einen Polarisationssensor an, der ein erfindungsgemäß ausgebildetes Polarisationsfilter umfasst.

Das vorgeschlagene Polarisationsfilter ist in bekannter Weise durch wenigstens ein periodisches Liniengitter aus parallel verlaufenden metallischen Stegen auf einer dielektrischen Schicht gebildet. Die Periode des Liniengitters, auch als Pitch bezeichnet, ist dabei jeweils so gewählt, dass sie kleiner als die Wellenlängen des Wellenlängenbereiches ist, für den das Polarisationsfilter ausgebildet ist. Unter der Periode bzw. dem Pitch wird dabei in bekannter Weise die Summe aus den Breiten jeweils eines metallischen Steges und eines Zwischenraums zwischen den metallischen Stegen verstanden. Die dielektrische Schicht, auf der die metallischen Stege angeordnet sind, muss entweder für den entsprechenden Wellenlängenbereich transparent oder reflektierend sein. Das vorgeschlagene Polarisationsfilter zeichnet sich dadurch aus, dass die metallischen Stege in ihrer Längserstreckung durch Schlitze unterbrochen sind. Die Schlitze weisen eine Tiefe bis zur dielektrischen Schicht auf, d.h. die Tiefe der Schlitze entspricht der Höhe der metallischen Stege. Die Schlitze erstrecken sich jeweils über die volle Breite der Stege. Die Mittenabstände dieser Schlitze sind dabei größer als die Periode des Liniengitters bzw. die Mittenabstände der metallischen Stege in der dazu senkrechten Richtung und variieren über das Polarisationsfilter. Die Schlitze können eine beliebige Querschnittsform in der Ebene der Längsachse der metallischen Stege senkrecht zur dielektrischen Schicht aufweisen, beispielsweise einen rechteckigen, V-förmigen oder U-förmigen Querschnitt.

Durch diese Schlitze in den metallischen Stegen wird erreicht, dass das hohe Aspektverhältnis der Stege jeweils nur in den zwischen den Schlitzen verlaufenden kürzeren Abschnitten auftritt. Kürzere Stegabschnitte weisen eine höhere Stabilität auf als längere Stegabschnitte. Damit wird auch bei hohem Aspektverhältnis der Stege verhindert, dass sich die Stege bei der Herstellung neigen oder dass die Stege umfallen. Durch die entsprechende Wahl der Mittenabstände der Schlitze größer als der Pitch der metallischen Stege wird die Polarisationswirkung nicht beeinträchtigt.

Das vorgeschlagene Polarisationsfilter lässt sich sehr vorteilhaft in einem CMOS-Prozess herstellen, bei dem auf die dielektrische Schicht zunächst eine metallische Schicht mit einer Dicke aufgebracht wird, die der gewünschten Höhe der metallischen Stege entspricht. Diese metallische Schicht wird anschließend in einem Lithographie-Prozess so strukturiert, dass die gewünschten metallischen Stege mit den quer zu ihrer Längserstreckung verlaufenden Schlitzen gebildet werden. Hierzu können bekannte Ätzverfahren zum Einsatz kommen.

Durch den vorgeschlagenen Aufbau des Polarisationsfilters lässt sich ein derartiges Filter auch auf einer größeren Fläche mit hohem Aspektverhältnis für den sichtbaren und auch für den ultravioletten Spektralbereich mit hoher Zuverlässigkeit herstellen, da sich die metallischen Gitterstege bei der Herstellung aufgrund der Schlitze nicht mehr zur Seite neigen oder umfallen können. Die Schlitze werden dabei nach Bedarf angeordnet und in einer unregelmäßigen Anordnung mit variierenden Mittenabständen realisiert. Durch diese variierenden Mittenabstände wird die Gefahr eines Einflusses der Schlitze auf die Polarisationswirkung des Polarisationsfilters nochmals verringert.

Die Schlitze verlaufen schräg zu den metallischen Stegen des Liniengitters. Besonders vorteilhaft ist dabei eine Anordnung, bei der die Schlitze senkrecht zu den metallischen Stegen des Liniengitters verlaufen. Diese Anordnung erreicht die höchste Stabilität. Die Schlitze können dabei auch breiter oder schmaler ausgeführt sein als die metallischen Stege des Liniengitters. Sie können beliebige geometrische Formen aufweisen, beispielsweise im Querschnitt (parallel zur dielektrischen Schicht) auch als Rauten, Dreiecke, Kreisscheiben oder Kreisausschnitte ausgebildet sein, solange sie die gewünschte Unterbrechung der metallischen Stege ermöglichen.

Zur Erzielung eines ausreichenden Kontrastes des Polarisationsfilters sollte das Aspektverhältnis der metallischen Gitterstege ausreichend groß sein, wobei vorzugsweise die Höhe der metallischen Stege größer als deren Breite ist. So kann für den sichtbaren Spektralbereich beispielsweise eine Höhe von ca. 400 nm bei einer Breite von ≤ 300 nm gewählt werden.

In einer bevorzugten Ausgestaltung wird das vorgeschlagene Polarisationsfilter in einem Polarisationssensor verwendet. Ein Polarisationssensor in CMOS-Technologie weist in der Regel ein photosensitives Element wie beispielsweise eine Photodiode auf, über dem sich, durch eine oder mehrere dielektrische Schichten getrennt, das Polarisationsfilter befindet. Im vorliegenden Fall lässt sich mit dem vorgeschlagenen Polarisationsfilter ein Polarisationssensor in CMOS-Technologie für den sichtbaren oder ultravioletten Spektralbereich realisieren.

Das vorgeschlagene Polarisationsfilter kann selbstverständlich auch eigenständig eingesetzt werden, wobei dann die dielektrische Schicht entweder direkt oder über eine oder mehrere weitere Zwischenschichten auf ein Trägersubstrat aufgebracht wird oder selbst ein Trägersubstrat bildet. Hierbei können auch mehrere der Liniengitter in gleicher oder unterschiedlicher Ausgestaltung nebeneinander auf dem Trägersubstrat aufgebracht sein. Dies gilt in gleicher Weise auch für eine Ausgestaltung in einem Polarisationssensor, bei dem dann die Fläche über dem photosensitiven Element vollständig mit entsprechenden Liniengittern bedeckt sein kann.

Das vorgeschlagene Polarisationsfilter erlaubt gegenüber den gattungsgemäßen Polarisationsfiltern des Standes der Technik eine Herstellung mit deutlich kleineren Abständen der Gitterlinien und/oder mit einer größeren Fläche bei hoher Ausbeute. Dadurch kann die untere nutzbare Wellenlänge des Polarisationsfilters verringert werden, so dass das Filter auch für Wellenlängen am unteren Rand des sichtbaren Spektrums und bis hinein in den ultravioletten Spektralbereich dimensioniert werden kann. Wird der Aufbau des vorgeschlagenen Polarisationsfilters genutzt, um die Filterfläche zu vergrößern, so können damit Polarisationssensoren realisiert werden, die deutlich größer sind als übliche Pixelgrößen von Bildsensoren. Es sind damit auch großflächige Polarisationssensoren mit mehreren 100 µm Kantenlänge herstellbar. Dadurch wird die lichtempfindliche Fläche vergrößert und die Sensorempfindlichkeit erhöht. Derartige Polarisationssensoren können bspw. in Polarisationskameras oder in Drehgebern eingesetzt werden.

### Kurze Beschreibung der Zeichnungen

Das vorgeschlagene Polarisationsfilter wird nachfolgend anhand von Ausführungsbeispielen in Verbindung mit den Zeichnungen nochmals näher erläutert. Hierbei zeigen:
- Fig. 1: ein erstes Beispiel für einen Aufbau des vorgeschlagenen Polarisationsfilters in Draufsicht (a) und im Querschnitt (b);
- Fig. 2: ein zweites Beispiel für einen Aufbau des vorgeschlagenen Polarisationsfilters in Draufsicht; und

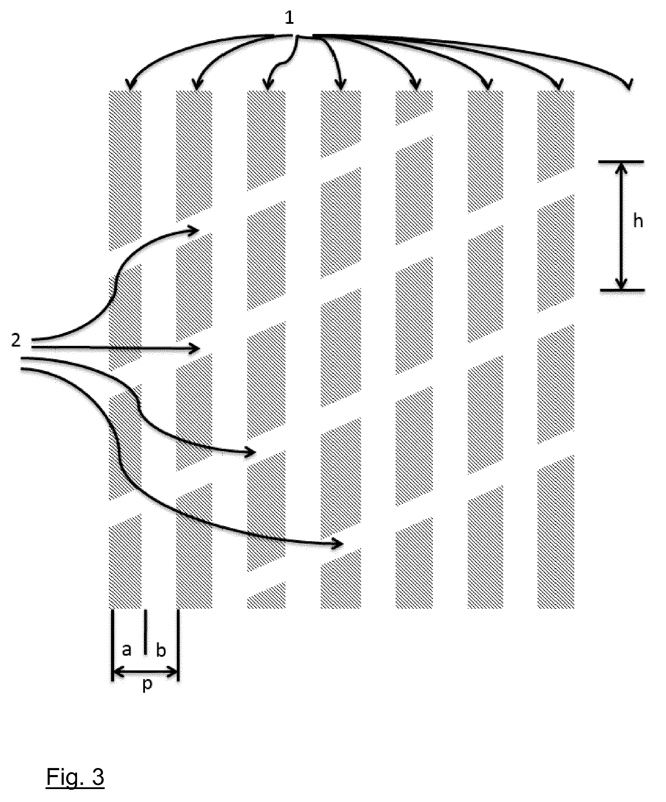

- Fig. 3: ein drittes Beispiel für einen Aufbau des vorgeschlagenen Polarisationsfilters in Draufsicht.

### Wege zur Ausführung der Erfindung

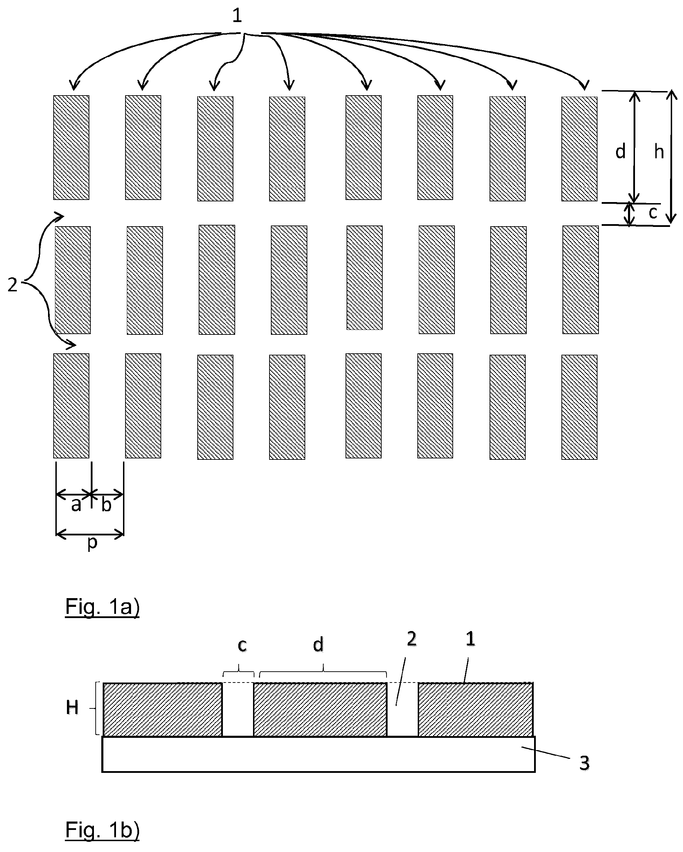

Fig. 1 zeigt beispielhaft eine erste Ausgestaltung des vorgeschlagenen Polarisationsfilters in Draufsicht (Teilabbildung a) und im Querschnitt (Teilabbildung b). Das Polarisationsfilter weist ein periodisches Liniengitter aus parallel verlaufenden metallischen Stegen 1 auf. Beim vorgeschlagenen Polarisationsfilter sind diese metallischen Stege 1 in Längserstreckung durch Schlitze 2 unterbrochen. Damit kann eine zuverlässige Herstellung des Polarisationsfilters bzw. der metallischen Stege des Liniengitters gewährleistet werden, ohne dass sich diese bei der Herstellung neigen oder gar umfallen. Die Schlitze 2 werden überall zwischen den metallischen Stegen 1 angebracht, wo dies für die mechanische Stabilität erforderlich ist. Die metallischen Stege 1 weisen im vorliegenden Beispiel eine Breite a auf, die Zwischenräume zwischen den metallischen Stegen 1 eine Breite b. Damit ergibt sich eine Periode bzw. ein Pitch p der Gitterlinien bzw. Stege von p = a + b. Um eine gute Wirkung als Polarisationsfilter zu erzielen, muss der Pitch p der Gitterlinien in Richtung senkrecht zur Erstreckung der Gitterlinien kleiner als λₘᵢₙ sein, wobei λₘᵢₙ die unterste Wellenlänge des Wellenlängenbereiches von λₘᵢₙ bis λₘₐₓ ist, für den das Polarisationsfilter ausgelegt ist. Die Mittenabstände der Schlitze 2 in der Richtung parallel zu den Gitterlinien müssen dabei größer als λₘₐₓ gewählt werden, damit die Wirkung des Polarisationsfilters durch diese Schlitze 2 nicht beeinträchtigt wird. Im Beispiel der Figur 1 ist hierbei die Breite c der Schlitze 2 und ein Abstand d zwischen den Schlitzen 2 angedeutet, der zu einem Pitch h dieser Schlitze in Richtung parallel zu den Gitterlinien führt. Dieser Pitch h bzw. Mittenabstand der Schlitze 2 kann von Linie zu Linie variieren und kann auch entlang jedes Steges 1 variieren.

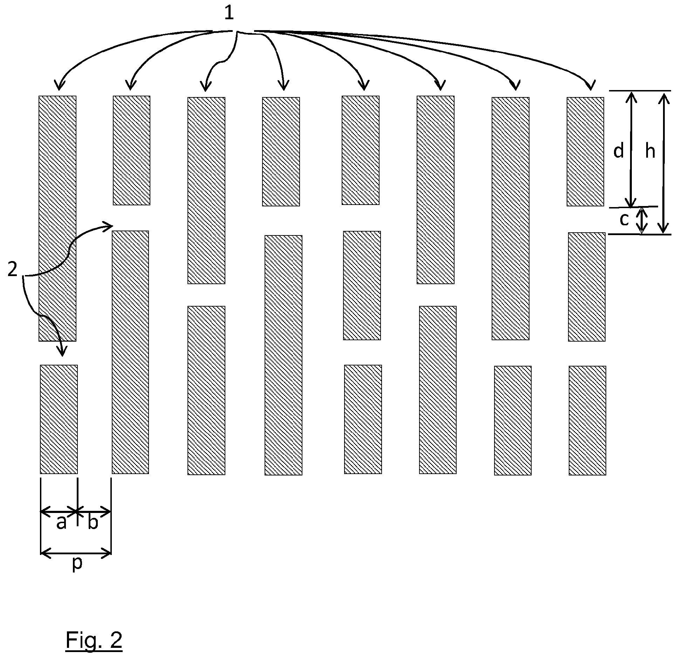

So zeigt beispielsweise Figur 2 eine Ausgestaltung des vorgeschlagenen Polarisationsfilters mit unregelmäßig angeordneten Schlitzen 2, bei denen die Mittenabstände der Schlitze 2 sehr stark über das Polarisationsfilter variieren. Hier muss wiederum der Pitch h der Schlitze 2 in Richtung parallel zu den Linien des Liniengitters zwar größer sein als λₘₐₓ, muss jedoch nicht überall gleich sein.

In der Teilabbildung b) der Figur 1 ist auch ein Querschnitt durch das Polarisationsfilter der Teilabbildung a) der Figur 1 gezeigt. In dieser Querschnittsansicht ist die Höhe H der metallischen Stege 1 sowie die in diesem Beispiel der Höhe H entsprechende Tiefe der Schlitze 2 zu erkennen. Die Höhe H ist größer als die Breite a der metallischen Stege 1 gewählt, um einen möglichst guten Kontrast des Polarisationsfilters zu erhalten. Die Breite c der Schlitze 2 kann in einem großen Bereich gewählt werden. Die untere Grenze ist durch die minimale Schlitzbreite vorgegeben, die im gewählten CMOS-Prozess noch realisierbar ist, z.B. 100 nm oder weniger. Die maximal zulässige Schlitzbreite ist nicht begrenzt, allerdings verschlechtert sich der Polarisationskontrast mit zunehmender Schlitzbreite. Weiterhin zeigt diese Teilabbildung b) auch die dielektrische Schicht 3, auf der die metallische Struktur angeordnet ist.

Eine weitere Möglichkeit zur Realisierung des Polarisationsfilters besteht in einer Anordnung, bei der die Schlitze 2 nicht senkrecht zu den metallischen Gitterstegen 1, sondern unter einem anderen Winkel schräg zu diesen Stegen verlaufen. Eine derartige Ausgestaltung ist beispielhaft in Figur 4 dargestellt. Auch hier gilt wiederum die obige Dimensionierungsvorschrift für den Mittenabstand der Schlitze 2.

Jede der für die Ausbildung als Polarisationsfilter geeigneten Grundanordnungen kann auch so verwendet werden, dass die jeweilige Grundanordnung bzw. das jeweilige Liniengitter mit den parallel verlaufenden metallischen Stegen 1 und den Schlitzen 2 ein- oder mehrfach wiederholt wird. Eine derartige Anordnung kann beispielsweise dazu verwendet werden, um die Fläche einer unter dem Polarisationsfilter liegenden Photodiode vollständig mit den Polarisationsfilterstrukturen abzudecken. Dabei können die metallischen Stege der Gitterelemente jeweils benachbarter Liniengitter auch miteinander verbunden sein.

### Bezugszeichenliste

- 1: Metallische Gitterstege
- 2: Schlitze
- 3: Dielektrische Schicht
- a: Breite der Gitterstege
- b: Breite des Zwischenraums zwischen den Gitterstegen
- c: Breite der Schlitze
- d: Breite des Zwischenraums zwischen den Schlitzen
- h: Mittenabstand der Schlitze
- p: Mittenabstand bzw. Pitch der metallischen Gitterstege
- H: Höhe der metallischen Gitterstege

## Patentansprüche

1. Polarisationsfilter, insbesondere für den sichtbaren oder ultravioletten Spektralbereich, das durch wenigstens ein periodisches Liniengitter aus parallel verlaufenden metallischen Stegen (1) auf einer dielektrischen Schicht (3) gebildet ist, wobei die metallischen Stege (1) in ihrer Längserstreckung durch Schlitze (2) unterbrochen sind, die sich bis auf die dielektrische Schicht (3) erstrecken, und wobei Mittenabstände der Schlitze (2) in Längserstreckung der metallischen Stege (1) größer als die Periode des Liniengitters sind und über das Polarisationsfilter variieren.

2. Polarisationsfilter nach Anspruch 1,
**dadurch gekennzeichnet,**
**dass** die Schlitze (2) senkrecht zu den metallischen Stegen (1) des Liniengitters verlaufen.

3. Polarisationsfilter nach Anspruch 1 oder 2,
**dadurch gekennzeichnet,**
**dass** die metallischen Stege (1) des Liniengitters eine Höhe über der dielektrischen Schicht (3) aufweisen, die größer als ihre Breite ist.

4. Polarisationsfilter nach einem der Ansprüche 1 bis 3, **dadurch gekennzeichnet,**
**dass** mehrere der periodischen Liniengitter aus den parallel verlaufenden metallischen Stegen (1) mit den Schlitzen (2) nebeneinander angeordnet sind.

5. Polarisationssensor mit einem photosensitiven Element, über dem ein Polarisationsfilter nach einem der vorangehenden Patentansprüche ausgebildet ist.
